# EUROPÄISCHE PATENTSCHRIFT

(11) **EP 4 204 746 B1**
(45) Veröffentlichungstag und Bekanntmachung des Hinweises auf die Patenterteilung: **15.07.2026**
(21) Anmeldenummer: 21769692.1
(22) Anmeldetag: 25.08.2021
(51) Int. Cl.: F25D 3/08, B65D 85/78

(54) **KÜHLBEHÄLTER UND KÜHLVERFAHREN FÜR SPEISEEIS**
COOLING CONTAINER AND COOLING METHOD FOR ICE CREAM
RÉCIPIENT DE REFROIDISSEMENT ET PROCÉDÉ DE REFROIDISSEMENT POUR CRÈME GLACÉE

(30) Priorität: 25.08.2020 DE 102020122225; 17.02.2021 DE 102021103760
(43) Veröffentlichungstag der Anmeldung: 05.07.2023
(73) Patentinhaber: Intellectual Properties Trading UG (Haftungsbeschränkt), 53919 Weilerswist (DE)
(72) Erfinder: SIEBRECHT, Andreas, 50374 Erftstadt (DE)
(74) Vertreter: Jorget, Quentin
(86) Internationale Anmeldenummer: PCT/EP2021/073531
(87) Internationale Veröffentlichungsnummer: WO 2022/043394

(56) Entgegenhaltungen:
- DE-A1- 2 819 569
- US-A- 3 413 820
- US-A- 4 630 671
- US-A- 4 877 128

## Beschreibung

Die Erfindung betrifft ein Verfahren zum Kühlen eines Speiseeis-Produktes, bei dem mindestens ein Kühlelement in eine Kühlsektion eines Kühlbehälters eingebracht wird und bei dem das Produkt in einen Aufnahmeraum des Kühlbehälters eingebracht wird. Sie betrifft ferner einen entsprechenden Kühlbehälter.

Kühlbehälter zum Transport von Speiseeis sind beispielsweise bekannt aus der DE 297 07 280 U1. Hier wird ein Transportbehältnis für befüllte Eiswaffeln und Eisbecher beschrieben. Das Transportbehältnis besteht aus einer faltbaren Hülle aus Kartonmaterial oder Kunststoff, in der ein Innenteil angeordnet ist, welches den Eisbecher oder die Eiswürfel hält. In der Höhle kann ein Einschubfach zur Aufnahme eines Kühlakkus vorgesehen sein. Das Transportbehältnis soll den Transport von frisch zubereiteten Eisportionen in Eiswaffen und Eisbecher ohne Qualitätsverlust ermöglichen.

Die Druckschrift JP 2004 067 116 A offenbarte ein Behältnis zur Auslieferung eines Speiseeisproduktes. Diese Verpackungen weist zwei ineinander gefügte Becher auf. Der untere Becher enthält das Speiseeis und der obere Becher enthält eine saftige Süßware, wobei der obere Becher als Deckel für den unteren Becher dient.

Die Druckschrift US 2020/0072523 A1 beschreibt ein zweistufiges Trockeneis-system zur Aufbewahrung verderblicher Güter beim Transport. Dem Trockeneis wird ein PCM-Material (Phasenwechselmaterial) zugeordnet, das eine höhere Kühltemperatur aufweist. Trockeneis und PCM-Material unterteilen den Behälter mittig in einen an das Trockeneis grenzenden Aufnahmeraum mit einer sehr niedrigen Temperatur und einen an das PCM-Modul grenzenden Aufnahmeraum mit einer etwas höheren Temperatur. Die offenbart einen Trinkbehälter mit zwei Temperaturzonen, in dem ein Getränk mit zwei verschiedenen Temperaturen gehalten ist, nämlich einer inneren Hochtemperaturzone und einer zur Ausströmöffnung hin liegenden Zone mit niedrigerer Verzehrtemperatur. Kühlboxen mit Aufnahmen für Kühlelemente, die das Innere der Kühlboxen in verschiedene Bereiche aufteilt, sind aus den Druckschriften DE 87 13 329 U1, DE 10 2016 107 813 B3, EP 3 090 961 A1 und US 4 294 079 A bekannt. Die US 2020/0148409 A1 beschreibt einen isolierten Pappkarton für gekühlte Produkte. Die KR 20-0357645 Y1 betrifft einen Aufnahmebehälter für Speiseeisbecher mit einem Aufnahmeraum für Trockeneis oberhalb der Speiseeisbecher. Die CN 211168094 U beschreibt einen Speiseeisbehälter mit einem hohlen Deckel, in dessen Hohlraum 1020160008816 A beschreibt einen Eisbecher, der im Boden einen Kühlraum zur Aufnahme von Trockeneis aufweist. US3413820A offenbart eine Verfahren zum Kühlen eines Produkts gemäß dem Oberbegriff des Anspruchs 1. US4630671 A, DE2819569A1 und US4877128A sind weitere Dokumente des Standes der Technik.

Aufgabe der Erfindung ist es, ein Verfahren und einen Behälter zum Kühlen eines Produkts, z.B. eines fertig dekorierten Speiseeis-Produktes, zu schaffen, welches die besonderen Eigenschaften verschiedener Produktbestandteile berücksichtigt und einen Transport und einer Auslieferung des Produktes in optimalen Zustand ermöglicht.

Diese Aufgabe wird erfindungsgemäß dadurch gelöst, dass der Aufnahmeraum in zwei Zonen unterteilt wird und die erste, untere Zone des Aufnahmeraums auf eine erste Temperatur unterhalb von -10 °C gekühlt und die zweite, obere Zone des Aufnahmeraums auf eine zweite Temperatur gekühlt wird, die nahe oder oberhalb des Gefrierpunkts von Wasser liegt.

Folglich werden nicht zwei unterschiedliche Behältnisse zur getrennten Aufnahme zweier unterschiedlicher Produktbestandteile vorgeschlagen, sondern der Aufnahmeraum zur Aufnahme des verzehrfertig zusammengefügten Produktes wird in zwei Zonen aufgeteilt, die auf zwei unterschiedliche Temperaturen gekühlt werden können. Dabei bleibt der Kühlbehälter transportierbar und braucht keine externe Stromversorgung.

Dieser Vorschlag beruht auf der Grundüberlegung, dass hochwertige Speiseeisprodukte häufig zusätzlich zu dem Speiseeis dekorative Elemente oder zusätzliche Bestandteile aufweisen, die eine andere Temperatur benötigen als das Speiseeis selbst. In der Regel liegt die optimale Temperatur für Speiseeis unterhalb von -10 °C, beispielsweise bei -14 °C. Bei dieser Temperatur hat das Speiseeis eine feste, aber dennoch zarte und nicht harte Konsistenz. Liegt die Temperatur des Speiseeises tiefer, wird es zu hart und verliert an Geschmack. Bei einer höheren Temperatur wird es zu weich und läuft Gefahr, vorzeitig zu schmelzen. Auf dem Speiseeis aufgebrachte zusätzliche Elemente, wie beispielsweise Früchte, Fruchtsaucen, Sahne, Schokolade oder feines Gebäck weisen dagegen eine deutlich höher liegende optimale Verzehrtemperatur auf, z.B. Kühlschranktemperatur im Bereich von 0 bis 7 °C. Insbesondere Sahne sollte nicht unter den Gefrierpunkt abgekühlt werden, weil sich anderenfalls beim anschließenden Auftauen die Bestandteile trennen und die Sahne ihre gewünschte Konsistenz verliert. Früchte und Fruchtsaucen ändern bei Temperaturen unter dem Gefrierpunkt ebenfalls ihre Konsistenz und verlieren beim anschließenden Auftauen über den Gefrierpunkt ihren Geschmack. Insbesondere Früchte wie Erdbeeren werden durch Fruchtsaftverlust beim Auftauen wässerig bzw. matschig.

Aus diesem Grund wird ein Kühlbehälter als Transportbehältnis vorgeschlagen, der mindestens einen zusammenhängenden Aufnahmeraum mit zwei auf verschiedene Temperaturen kühlbare Zonen für das Produkt aufweist. Die erste, untere Zone, die einen Eisbecher oder eine Eiswaffel aufnimmt, wird auf die optimale Verzehrtemperatur des Eises gekühlt. Die zweite, obere Zone wird auf eine Temperatur gekühlt, die nahe oder oberhalb des Gefrierpunkts liegt, um einen Qualitätsverlust von in dieser zweiten Zone befindlichen zusätzlichen Elementen des Speiseeisprodukts durch übermäßige Kühlung zu vermeiden. Das Speiseeisprodukt wird folglich innerhalb des Behälters konstant auf der optimalen Verzehrtemperatur gehalten. Der Verzehr unmittelbar nach der Entnahme aus dem Kühlbehälter bietet dem Kunden daher die optimale Konsistenz und den optimalen Geschmack des Speiseeisproduktes wie bei dem unverzüglich nach der Herstellung erfolgenden Verzehr in einer Eisdiele.

In der Praxis kann mindestens ein erstes Kühlelement mit einer ersten Temperatur in eine erste Kühlsektion des Kühlbehälters eingebracht werden, die an die erste Zone angrenzt, und mindestens ein zweites Kühlelement mit einer zweiten Temperatur in eine zweite Kühlsektion des Kühlbehälters eingebracht werden, die an die zweite Zone angrenzt. Kühlelemente werden auch als Kühlakkus bezeichnet und weisen eine Kühlflüssigkeit auf. Die Kühlflüssigkeit wird auf eine bestimmte Temperatur gekühlt. Während eines gewissen Zeitraums hält die Kühlflüssigkeit die Temperatur und sorgt so für die Beibehaltung einer niedrigen Temperatur in der Nähe des Kühlelements. Wenn beispielsweise der Kühlbehälter zur Aufnahme eines Speiseeisproduktes in einem Becher bestimmt ist, auf dessen Oberseite Sahne und Früchte angeordnet sind, kann sich die erste Kühlzone im unteren Bereich des Kühlbehälters befinden, der den Becher mit dem Speiseeis aufnimmt, und die zweite Kühlzone kann im oberen Bereich des Kühlbehälters liegen, der die Sahne und Früchte aufnimmt.

Insbesondere sind auch Kühlelemente bekannt, deren Kühlflüssigkeit einen Phasenwechsel durchführen. Derartige Kühlflüssigkeit wird auch PCM-Material (Phasenwechselmaterial) genannt. Eine derartige Kühlflüssigkeit zeichnet sich durch eine besonders effektive Kühlung bei einer vorbestimmten Temperatur aus. In der Praxis können Kühlelemente mit unterschiedlichen Kühlflüssigkeiten zur Kühlung der verschiedenen Zonen verwendet werden. Die Phasenwechseltemperatur der Kühlflüssigkeit in dem Kühlelement in der ersten Kühlsektion, welche das Speiseeis kühlt, liegt unter -10 °C, vorzugsweise im Bereich zwischen -14 und -18 °C. Die Phasenwechseltemperatur der Kühlflüssigkeit des Kühlelements in der zweiten Kühlsektion kann dagegen einen deutlich höheren Wert haben und eine Kühlung der zweiten Kühlsektion auf Kühlschranktemperatur, z.B. zwischen 0 und 7 °C bewirken.

In der Praxis kann die erste Kühlsektion und die erste Zone in einem Grundkörper des Kühlbehälters angeordnet sein, wobei die zweite Kühlsektion und die zweite Zone in einem Deckel des Kühlbehälters angeordnet ist. Dabei wird das Produkt in den Grundkörper eingestellt und der Deckel so auf den Grundkörper aufgesetzt, dass der Aufnahmeraum verschlossen wird. Der Grundkörper umgibt also den Becher oder die Waffel mit dem darin eingefügten Eis. Der Deckel umgibt den Bereich oberhalb des Bechers, auf dem üblicherweise zusätzliche Elemente wie Sahne, Soße und Fruchtstücke angeordnet sind.

In der Praxis kann in dem Grundkörper ein Einsatz und in dem Deckel eine kuppelförmige Abdeckkappe eingebracht werden und die Abdeckkappe mit dem Grundkörper oder dem Einsatz verrastet werden. Die zusätzlichen Elemente auf einen Eisbecher sind häufig sehr empfindlich. Insbesondere bei dekorativer Anordnung von Sahne, Saucen und Fruchtstücken auf einem Eisbecher ist dafür Sorge zu tragen, dass nach dem Anrichten des Eisbechers insbesondere kein Kontakt des Kühlbehälters mit diesen dekorativen zusätzlichen Elementen auftritt. Diese Gefahr wird dadurch beseitigt, dass zum Halten des Bechers ein Grundkörper vorgeschlagen wird, der den unteren Teil des Kühlbehälters bildet und in dem ein Einsatz vorgesehen ist, der den Becher fixiert. In einem Deckel des Kühlbehälters ist die zweite Kühlsektion angeordnet, in der das zweite Kühlelement aufgenommen ist. Die zweite Kühlsektion ist durch eine Abdeckkappe, z.B. aus transparenten Kunststoff, von der Zone des Aufnahmeraums, in der die Dekorationselemente sich befinden, getrennt. Die Abdeckkappe wird mit dem Einsatz oder dem Grundkörper verrastet, sodass sie in ihrer Position gehalten wird. Hierdurch wird zuverlässig vermieden, dass die Dekorationselemente von außen insbesondere durch den Kühlbehälter kontaktiert und dadurch beschädigt werden. Die Abdeckkappe kann auch für die Temperaturführung in der zweiten oberen Zone eingesetzt werden. Beispielsweise kann die Abdeckkappe aus isolierendem Material bestehen, welches die oben auf dem Speiseeis-produkt befindlichen Dekorationselemente gegen eine zu starke Kühlwirkung des Kühlelements oder der Kühlelemente in dem Kühlbehälter abschirmt. Die Abdeckkappe kann aber auch selbst zweiwandig ausgebildet sein und einen Hohlraum umschließen, der mit PCM-Kühlflüssigkeit befüllt ist. Die PCM-Kühlflüssigkeit in der Abdeckkappe wird dann auf eine Temperatur nahe dem Gefrierpunkt gekühlt und bewahrt die Zieltemperatur in der zweiten Zone des Aufnahmeraums für das Speiseeisprodukt, die deutlich über der Temperatur in der ersten Zone liegt.

In der Praxis können zwei zueinander komplementäre Rastelemente miteinander in Eingriff gebracht werden, die einerseits an der Abdeckkappe und andererseits an dem Einsatz bzw. dem Grundkörper angeordnet sind, wobei mindestens ein Rastelement an einer verlagerbaren Wandung angeordnet ist und durch Lageänderung der Wandung die Verrastung gelöst wird. Z.B. kann die Abdeckkappe einen vorspringenden Rand aufweisen, der in einem Schlitz des Einsatzes oder des Grundkörpers verrastet. Wie weiter unten erläutert wird, besteht der Einsatz und der Grundkörper vorzugsweise aus einem gefalteten Kappungszuschnitt. Der Schlitz kann in einem perforierten Bereich des Einsatzes oder des Grundkörpers angeordnet sein, der herausreißbar ist. Durch herausreißen dieses Bereiches kann die Rastverbindung gelöst werden. Der Schlitz kann aber auch in einem Bereich einer Knicklinie angeordnet sein, entlang der ein Element des Grundkörpers oder des Einsatzes bei zusammengefügtem Kühlbehälter umgeknickt ist. Durch Zurückknicken des genannten Elements kann der in dem Schlitz aufgenommene Rastvorsprung freigelegt werden. Eine praktische Ausführungsform dieses Vorschlags wird weiter unten im Detail beschrieben.

In der Praxis kann in dem Kühlbehälter ein Zugelement angeordnet und durch Ziehen an dem Zugelement das Produkt aus dem Grundkörper bewegt werden. Sinnvollerweise ist der Kühlbehälter ein geschlossener Körper, beispielsweise in Form eines Quaders oder eines Zylinders. Der Grundkörper bildet die eine Hälfte des Behälters, in der der Eisbecher aufgenommen ist. Der Deckel bildet die zweite Hälfte des Kühlbehälters, welche Sahne, Früchte, Soße und weitere Dekoration auf dem Speiseeis abdeckt. Nachdem der Deckel entnommen ist, ist die Dekoration auf dem Speiseeis frei liegend. Es ist aber nicht möglich, den Becher zu ergreifen, ohne die Dekoration zu berühren und dabei zu beschädigen. Aus diesem Grund wird ein Zugelement vorgeschlagen, mit dem das Produkt aus dem Grundkörper heraus bewegt werden kann.

In der Praxis kann die erste Zone auf eine Temperatur von unter - 10 °C gekühlt, vorzugsweise auf eine Temperatur von etwa - 14 °C gekühlt werden. Die Temperatur in der zweiten Zone weicht hiervon ab. Insbesondere bei der bevorzugten Verwendung zum Transport eines Speiseeis-Produktes, das im Becher das Eis und auf dem Becher in der zweiten Zone Sahne, Fruchtstücke und Fruchtsoßen aufweist, kann die zweite Zone auf eine Temperatur von etwa 0 °C oder leicht darüber gekühlt werden. So kann das fertige Speiseeis-Produkt verzehrfertig zubereitet werden und dann zum Kunden transportiert werden. Wegen der Kühlung durch die Kühlelemente auf die optimale Verzehrtemperatur ist es möglich, das Speiseeis-Produkt über einen langen Zeitraum, beispielsweise 30 min bis 60 min auf der optimalen Verzehrtemperatur zu halten und dadurch die optimale Verzehrkonsistenz zu bewahren. Dieses Kühlverfahren ermöglicht es folglich, Speiseeis-Produkte auch in warmen Ländern, z.B. arabischen oder afrikanischen Ländern sowie bei sommerlichen Temperaturen, verzehrfertig zu verpacken und dann über einen Lieferdienst an den Kunden - ohne Qualitätseinbuße - auszuliefern. Das Speiseeis-Produkt bleibt über einen üblichen Lieferzeitraum von 30 Minuten, maximal 60 Minuten auf seiner optimalen Temperatur. Dabei behält das Eis seine Verzehrtemperatur von ca. -14 ° C bei und die Sahne und/oder Früchte von ca. 0 bis 7 ° C. Das Speiseeis-Produkt ist unmittelbar nach der Entnahme aus dem Aufnahmeraum verzehrfertig.

Bei einer Variation des Kühlverfahrens kann der Aufnahmeraum mindestens einen Bereich mit mehreren Wandungen aufweisen. In einen Hohlraum, der zwischen die Wandungen gebildet wird, kann eine Kühlflüssigkeit eingefüllt werden. Auf diese Weise wird das Kühlelements dauerhaft in den Hohlraum zwischen den Wandungen eingebracht. In den Hohlraum zwischen den Wandungen kann alternativ ein thermisch wenig leitfähiges Medium zur thermischen Isolation des Aufnahmeraums eingefüllt werden. Bei dieser Ausgestaltung wirkt der Hohlraum als Isolator und reduziert den Wärmeaustausch mit der Umgebung. Diese Variation mit mindestens einem durch die Wandungen des Aufnahmeraums gebildeten Hohlraum ist vorzugsweise zur wiederholten Verwendung bestimmt. Die Wandungen, welche den Hohlraum bilden, können aus widerstandsfähigem Material wie Kunststoff oder Metall bestehen. Durch das Einfüllen eines der oben spezifizierten Medien kann der Hohlraum integral in der Verpackung entweder kühlend oder isolierend wirken. Wenn der Hohlraum mit Luft befüllt ist, welche eine geringe Wärmeleitfähigkeit aufweist, isoliert er den Aufnahmeraum des Kühlbehälters thermisch. Wenn der Hohlraum mit einer Kühlflüssigkeit, insbesondere einem Phasenwechselmaterial, befüllt ist, wirkt er als Temperaturspeicher und bewirkt, dass die Temperatur, auf welche der Kühlbehälter gekühlt ist, nur langsam ansteigt. Natürlich können auch - wie weiter unten beschrieben - zwei Hohlräume gebildet werden, von denen ein äußerer Hohlraum einen inneren Hohlraum umgibt. Im äußeren Hohlraum kann dann das thermisch isolierende Medium angeordnet werden. Im inneren Hohlraum kann die Kühlflüssigkeit eingefüllt werden.

Dementsprechend bezieht sich die Erfindung auch auf einen Kühlbehälter mit mindestens einem Aufnahmeraum für ein Produkt und einem an den Aufnahmeraum angrenzenden Kühlsektor zur Aufnahme eines Kühlelements. Um ein empfindliches Produkt wie ein Speiseeis-Produkt, das unterschiedliche Bestandteile bei unterschiedlichen Temperaturen aufweist, optimal kühlen zu können, grenzen an den Aufnahmeraum mindestens zwei Kühlsektoren, in die Kühlelemente einbringbar sind, die den Aufnahmeraum in mindestens zwei Zonen auf zwei unterschiedliche Temperaturen kühlen.

Der Kühlbehälter hat vorzugsweise eine isolierende Außenwand, die die Kälte innerhalb des Kühlbehälters hält und die beiden Zonen vor zu schneller Erwärmung schützt. Eine Außenwand aus Wellpappe erfüllt diese Anforderungen. Die Außenwand kann auch mehrlagig ausgebildet sein, um die Isolierung zu verbessern.

Der Kühlbehälter kann in der Praxis einen Grundkörper aus einem dünnwandigen Material aufweisen, der eine erste Zone zur Aufnahme eines Bechers aufweist, die von einem ersten Kühlsektor umgeben ist. Ferner kann der Kühlbehälter einen Deckel aus einem dünnwandigen Material aufweisen, der eine zweite Zone aufweist, die von einem zweiten Kühlsektor umgeben ist. Sowohl Grundkörper als auch Deckel können aus einem Zuschnitt aus Wellpappe gebildet werden, die entlang von Knicklinien geformt ist, um die entsprechenden Elemente des Kühlbehälters zu bilden. Sowohl Grundkörper als auch Deckel können mehrlagige Wandungen aufweisen, um die Isolierung durch das Wandmaterial zu steigern.

In der Praxis kann der Grundkörper des Kühlbehälters einen Einsatz aufweisen, der den Becher in der ersten Zone hält. Auch dieser Einsatz kann als gefalteter Pappzuschnitt ausgebildet sein. Der Einsatz kann aber auch ein haltbareres und wiederverwendbares Teil, z.B. aus Metall oder Kunststoff sein. Insbesondere kann der der Einsatz einen den Becher umgebenden Hohlraum aufweisen, der mit PCM-Kühlflüssigkeit gefüllt ist. Der Einsatz selbst kann also als Kühlakku ausgebildet sein. Er wird dann auf die erforderliche Temperatur des Speiseeises gekühlt und kühlt den Becher, der von dem Hohlraum des Einsatzes mit geringem Spiel umgeben wird. Der Einsatz kann insbesondere derart ausgebildet sein, dass ein oberer Rand des Bechers frei ergreifbar ist, um den Becher aus dem Einsatz zu entfernen. Bei einem derartig aufwändigen Einsatz ist es aber vorzuziehen, dass der Einsatz mehrfach verwertbar ist. Der Einsatz kann nach der Auslieerung des Speiseeisproduktes, vorzugsweise mit dem Rest der Verpackung, wieder an den Lieferanten zurückgesendet werden, so dass er mehrfach für das Ausliefern von Speiseeis eingesetzt werden kann. Auf ähnliche Weise kann auch eine Abdeckkappe innerhalb des Deckels mit einem Hohlraum ausgebildet werden, in dem eine Kühlflüssigkeit aufgenommen ist, die auf die höhere Temperatur in der zweiten Kühlzone mit der höheren Temperatur gekühlt wird.

Der Deckel kann eine kuppelförmige Abdeckkappe aufweisen. Diese Abdeckkappe kann die zweite Kühlsektion mit dem darin befindlichen Kühlelement von dem in dem Kühlbehälter aufgenommenen Produkt trennen. Durch die in der Abdeckkappe eingeschlossene Luft wird ferner die Verzierung vor Kühlung unter 0 °C geschützt, weil Luft ein schlechter Wärmeleiter ist.

Dadurch wird vermieden, dass der obere Bereich des Produktes, bei einem Speiseeis-Produkt die Sahne oder Verzierung, ungewollt berührt und beschädigt wird. Die Abdeckkappe kann mit dem Einsatz oder dem Grundkörper verrastbar sein. Dadurch wird die Abdeckkappe fest an dem Einsatz oder an dem Grundkörper gehalten und schützt den oberen Bereich des Produktes, bis die Abdeckkappe zum Verzehr entfernt wird. Zwei zueinander komplementäre Rastelemente können einerseits an der Abdeckkappe und andererseits an dem Einsatz bzw. dem Grundkörper angeordnet sein. Beispielsweise greift ein Rastvorsprung an der Abdeckkappe in einen Rastschlitz des Einsatzes. Mindestens eines der Rastelemente kann an einer verlagerbaren Wandung angeordnet sein, wobei durch Lageänderung der Wandung die Verrastung lösbar ist. Zum Beispiel kann ein Rand des Rastschlitzes in einer der Pappwandungen angeordnet sein, die perforiert und ausreißbar ist. Durch Ausreißen des von der Perforation begrenzten Abschnittes wird die Verrastung gelöst. Zum Beispiel kann ein Rand des Rastschlitzes auch nahe einer Knicklinie verlaufen, entlang der die verlagerbare Wandung umknickbar ist. So wird durch Umknicken der Wandung die Rastverbindung gelöst.

In der Praxis kann der Einsatz des Grundkörpers des Kühlbehälters eine Zuglasche aufweisen, mit der er zusammen mit dem darin gehaltenen Becher aus dem Grundkörper ziehbar ist. Der Becher, befüllt mit Speiseeis und darauf befindlicher Dekoration wie Sahne, muss also nicht selbst ergriffen werden, sondern kann mit Hilfe der Zuglasche aus dem Grundkörper des Kühlbehälters gezogen werden. In der Praxis kann eine Rastöffnung des Einsatzes als erstes Rastelement, mit der ein Rastvorsprung an der Abdeckkappe als zweites Rastelement zusammenwirken. In diesem Fall kann die Rastöffnung an der Zuglasche des Einsatzes angeordnet sein, wobei die Zuglasche bei aus dem Grundkörper entnommenen Einsatz umklappbar ist und dabei den Rastvorsprung freigibt. Es wird also erst der Einsatz durch Ziehen an der Zuglasche aus dem Grundkörper entnommen und dann durch Umklappen der Zuglasche die Rastverbindung der Abdeckkappe mit dem Einsatz gelöst.

Wie erwähnt, kann in der Praxis auch der Einsatz aus einem flächigen Zuschnitt bestehen, insbesondere aus einem Pappzuschnitt. Der Zuschnitt kann eine Tragwand mit einer Öffnung zur Aufnahme des Bechers aufweisen sowie mehrere Seitenwände, die über Knicklinien mit der Tragwand verbunden sind. In dem zusammengesetzten Kühlbehälter halten die Seitenwände die Tragwand in einem Abstand zu einer Bodenwand des Grundkörpers. Dieser Abstand kann die erste Kühlsektion bilden, in der das kalte Kühlelement aufgenommen ist. Das kalte Kühlelement kann aber auch unterhalb der Bodenwand des Grundkörpers in einem separaten abgetrennten Raum liegen. Nach der Entnahme des Einsatzes aus dem Grundkörper können die Seitenwände aufgeklappt werden und die Tragwand kann nach unten gedrückt werden, bis sie sich am unteren Ende des aufgenommenen Produktes, insbesondere des Eisbechers befindet. Der Eisbecher kann dann leicht entnommen werden. In der Praxis können die Seitenwände derart elastisch federnd ausgebildet sein, dass sie bei in dem Grundkörper aufgenommenen Einsatz gegen die Außenwandungen des Grundkörpers federnd angedrückt werden und bei der Entnahme des Einsatzes aus dem Grundkörper auffedern. Diese Bewegung erleichtert es dem Benutzer, durch einfaches Herunterdrücken der Tragwand die Seitenwände des Einsatzes völlig aufzuspreizen und den Becher zu entnehmen.

Bei einer wiederverwendbaren Variante des Kühlbehälters können dessen Bestandteile aus widerstandsfähigem Material wie Kunststoff oder Metall, insbesondere Aluminium oder Edelstahl, gefertigt sein. Bei dieser Variante kann der Grundkörper oder der Deckel oder auch beide Bestandteile des Kühlbehälters einen Bereich mit mehreren Wandungen aufweisen, zwischen denen ein geschlossener Hohlraum gebildet ist. Wie oben erläutert, kann der Hohlraum mit einer Kühlflüssigkeit befüllt werden. In diesem Fall bildet die Kühlflüssigkeit das in den Kühlbehälter eingebrachte Kühlelement. Alternativ kann der Hohlraum mit Luft oder einem anderen thermisch wenig leitfähigen Gas befüllt sein. Dieses Gas kann einen Unterdruck aufweisen und optimaler Weise ein Vakuum bilden, um die thermische Leitfähigkeit weiter zu reduzieren. In diesem Fall bildet das thermisch wenig leitfähige Gas eine Isolation, welche eine schnelle Erwärmung des Aufnahmeraums des Behälters vermeidet. Natürlich können in dem Deckel oder dem Grundkörper auch aneinander angrenzend ein äußerer Hohlraum mit thermisch wenig leitfähigem Gas und ein innerer Hohlraum mit Kühlflüssigkeit vorgesehen sein.

Die Merkmale des erfindungsgemäßen Kühlbehälters können einzeln an dem Kühlbehälter vorhanden sein und diesen vorteilhaft fortbilden. Insbesondere können folgende Merkmale einzeln an dem Kühlbehälter mit zusammenhängendem Aufnahmeraum mit Zweizonenkühlung verwirklicht sein:
- der Grundkörper weist mindestens einen Einsatz auf, der den Becher in der ersten Zone hält;
- der Einsatz im Grundkörper weist einen den Becher umgebenden Hohlraum auf, der ein erstes Kühlelement bildet;
- der Deckel weist eine kuppelförmige Abdeckkappe auf;
- die Abdeckkappe weist einen Hohlraum auf, der ein zweites Kühlelement bildet;
- die Abdeckkappe ist mit dem Einsatz oder dem Grundkörper verrastbar;
- zwei zueinander komplementäre Rastelemente sind einerseits an der Abdeckkappe und andererseits an dem Einsatz bzw. dem Grundkörper angeordnet;
- mindestens ein Rastelement ist an einer verlagerbaren Wandung angeordnet, wobei durch Lageänderung der Wandung die Verrastung lösbar ist;
- die verlagerbare Wandung ist perforiert und ausreißbar;
- die verlagerbare Wandung ist entlang einer Knicklinie umknickbar.

Weitere praktische Ausführungsformen und Vorteile der Erfindung sind nachfolgend im Zusammenhang mit den Zeichnungen beschrieben. Es zeigen:
- Fig. 1: eine dreidimensionale Vorderansicht eines hier beschriebenen Kühlbehälters;
- Fig. 2: eine Schnittansicht des Kühlbehälters aus Fig. 1;
- Fig. 3: eine dreidimensionale Schnittansicht des Kühlbehälters aus Fig. 1;
- Fig. 4: eine dreidimensionale Ansicht des Deckels des Kühlbehälters aus Fig. 1 von schräg unten;
- Fig. 5: eine dreidimensionale Ansicht des Grundkörpers des Kühlbehälters aus Fig. 1 von schräg oben;
- Fig. 6: eine dreidimensionale schräge Draufsicht auf einen Einsatz des Kühlbehälters;
- Fig. 7: eine dreidimensionale schräge Draufsicht auf einen weiteren Einsatz des Kühlbehälters;
- Fig. 8: eine geschnittene Vorderansicht des Einsatzes aus Fig. 7 mit einem darin aufgenommenen Becher;
- Fig. 9: eine der Fig. 7 entsprechende Ansicht, in der zusätzlich eine Abdeckkappe dargestellt ist;
- Fig. 10: eine der Fig. 8 entsprechende Ansicht, in der zusätzlich der Einsatz aus Fig. 6 dargestellt ist;
- Fig. 11: eine dreidimensionale Ansicht der Einsätze mit Becher und Abdeckkappe aus Fig. 9;
- Fig. 12: eine der Fig. 2 entsprechende Darstellung einer zweiten Ausführungsform des Kühlbehälters;
- Fig. 13: eine der Fig. 3 entsprechende Darstellung des Kühlbehälters aus Fig. 12;
- Fig. 14: eine dreidimensionale Ansicht der zwei Einsätze des Kühlbehälters aus Fig. 12;
- Fig. 15: die Einsätze aus Fig.14 mit Becher und Abdeckkappe in geschnittene Darstellung;
- Fig. 16: die Anordnung aus Figur 15 in dreidimensionale Draufsicht;
- Fig. 17: eine der Fig 12. entsprechende Ansicht einer Variante eines Kühlbehälters aus widerstandsfähigem Material;
- Fig. 18: eine Variante eines Einsatzes, der einen Aufnahmeraum für eine PCM-Kühlflüssigkeit enthält.

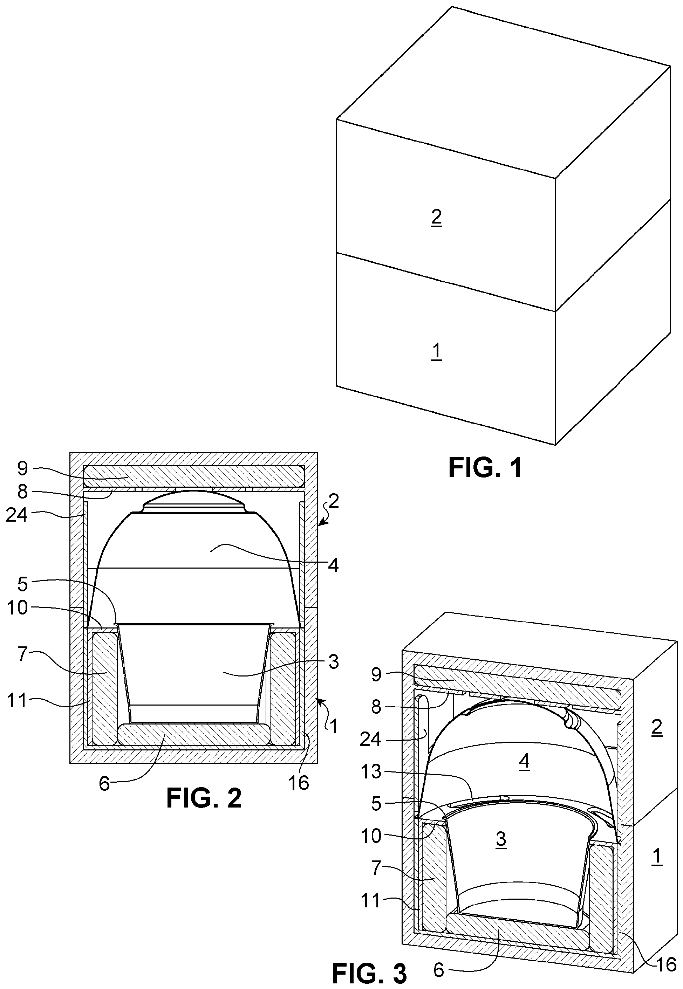

Die Figuren 1 bis 11 zeigen eine erste Ausführungsform eines Kühlbehälters, welcher die hier beschriebene Zweizonenkühlung ermöglicht. Wie in Fig. 1 zuerkennen, besteht der Kühlbehälter aus einem Grundkörper 1 und einem Deckel 2 und hat die Form eines Quaders. Sowohl der Deckel 2 als auch der Grundkörper 1 haben die Form einer quaderförmigen Schale. Grundkörper 1 und Deckel 2 können im Wesentlichen dicht miteinander verbunden werden und umschließen gemeinsam den Aufnahmeraum. Die in den Zeichnungen dargestellte Form des Kühlbehälters ist variabel und kann von der dargestellten Quaderform abweichen. Der Kühlbehälter kann zum Beispiel zylindrisch sein oder eine andere Form aufweisen. Auch das Material kann variabel sein. Pappe, Kunststoff, insbesondere Schaumstoff aber auch Glas oder Metall eignen sich zur Herstellung der Außenwand des Kühlbehälters.

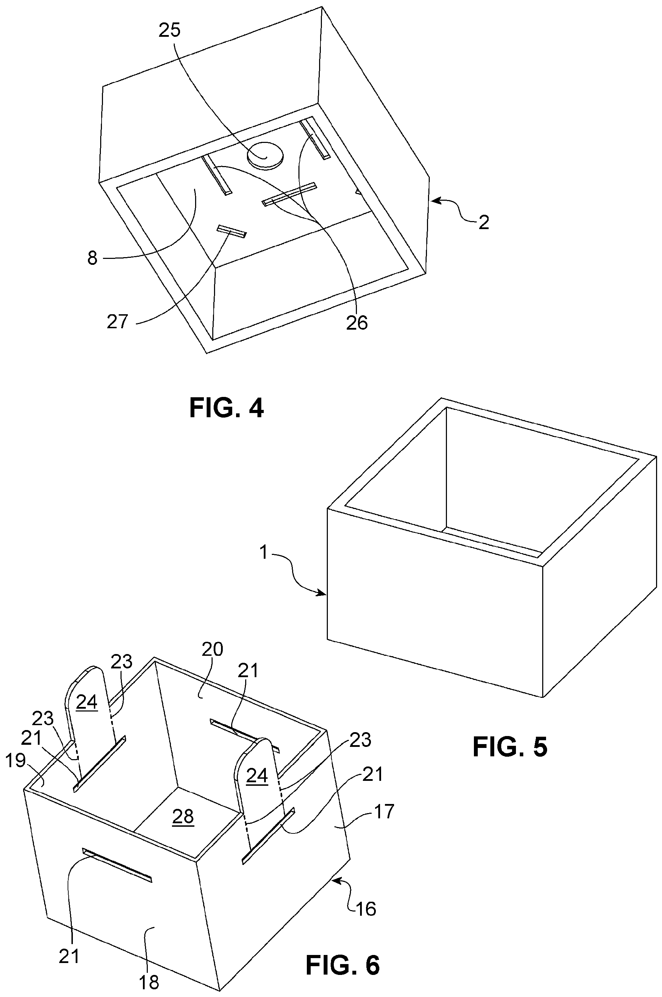

Die Außenwand des Grundkörpers 1 ist in Fig. 5 freigestellt abgebildet. Der isolierte Deckel 2 ist in Fig. 4 zu erkennen. Der Grundkörper 1 und der Deckel 2 können aus einem isolierenden synthetischen Schaumstoff hergestellt sein. Es sind geschäumte Kunststoffe auf der Basis von polymerisierter Milchsäure bekannt, die für diesen Zweck geeignet sind und vollständig biologisch abbaubar sind. Es ist auch möglich, derartige quaderförmige Schalen aus Wellpappe zu fertigen. Bei der Materialauswahl sollte darauf geachtet werden, dass eine hinreichende thermische Isolierung erzielt wird. Wenn beispielsweise die Wandungen der Schalen aus Wellpappe bestehen, können diese mehrlagig ausgeführt sein, um die gewünschte Isolierung zu erreichen.

Die Fig. 2 und 3 zeigen jeweils einen Querschnitt des Kühlbehälters aus Fig. 1 mit darin eingesetzten Becher 3 und einer Abdeckkappe 4, welche die Inhalte des Bechers 3 und insbesondere die oberhalb des Becherrandes 5 liegenden Dekorationen schützt. Der Becher 3 ist dazu bestimmt, mit Speiseeis befüllt zu werden. Auf das Speiseeis wird oberhalb des Becherrandes 5 die Dekoration des Speiseeis, nämlich Schlagsahne, Fruchtstücke oder Fruchtsaucen, feines Gebäck, Schokolade o. ä. aufgebracht. Diese Dekoration befindet sich innerhalb der Abdeckkappe 4 und ist durch diese gegen ungewollte Berührungen geschützt.

Innerhalb des Basisteils 1 entsteht eine erste Kühlsektion, welche von der Bodenwand und der Seitenwand des Bechers 3 und von der Bodenwand und der Seitenwand des Basisteils 1 begrenzt wird. In der ersten Kühlsektion sind zwei Kühlelemente 6 und 7 angeordnet. Ein erstes Kühlelement 6 hat die Form einer Scheibe und liegt auf der Bodenwand des Basisteils 1 auf, sodass es sich unmittelbar unter dem Becher 3 befindet. Ein zweites Kühlelement 7 hat die Form einer ringförmigen Manschette und umgibt die Seitenwand des Bechers 3. Beide Kühlelemente 6 und 7 sind auf eine tiefe Temperatur gekühlt, die das Speiseeis auf der optimalen Verzehrtemperatur hält. Diese liegt in der Regel zwischen -14 und -18 °C. Die Temperatur der Kühlelemente 6,7 kann auch etwas niedriger gewählt werden, wenn beabsichtigt ist, das Speiseeis erst nach Ablauf einer längeren Zeitdauer zu verzehren.

Eine zweite Kühlsektion befindet sich im Deckel 2 oberhalb einer dünnen Trennwand 8. Auch in dieser Kühlsektion ist ein Kühlelement 9 aufgenommen. Das Kühlelement 9 erstreckt sich im Wesentlichen über die gesamte innere Fläche der Kühlsektion innerhalb des Deckels 2 und kann auf eine weniger tiefe Temperatur gekühlt werden. Diese Temperatur des Kühlelements 9 liegt unterhalb des Gefrierpunkts von Wasser, um die zweite Kühlsektion auf eine Temperatur von etwa 0 °C bis 7 °C zu kühlen. In der Trennwand 8 sind mehrere Schlitze 26, 27 und eine Öffnung 25 vorgesehen, welche eine Temperaturübertragung vom Kühlelement 9 im Wege der Konvektion ermöglichen.

Auf diese Weise entsteht in dem Bereich oberhalb des Kühlelements 6 und innerhalb des manschettenförmigen Kühlelements 7 eine erste Zone, die auf eine niedrigere Temperatur gekühlt ist, welche im Wesentlichen der Verzehrtemperatur des Speiseeis entspricht. In diese erste Zone ist der Becher 3 eingefügt, der das Speiseeis aufnimmt. Oberhalb des Bechers 3 und innerhalb der Abdeckkappe 4 entsteht eine zweite Kühlzone, die auf eine zweite, deutlich höhere Temperatur gekühlt ist. Die zweite Temperatur liegt oberhalb des Gefrierpunkts von Wasser, beispielsweise bei 0 bis 7 °C. Sahne und Dekorationen auf dem Speiseeis werden auf diese Weise daran gehindert, zu gefrieren. Dies bewahrt ihre ursprüngliche Konsistenz und ihre hohe Qualität.

In Fig. 2, 3, 7, 8, 9 und 10 ist zu erkennen, dass der Becher 3 von einer Tragwand 10 getragen wird, die Teil eines ersten Einsatzes 11 ist. Die Tragwand 10 des ersten Einsatzes 11 weist zu diesem Zweck eine große mittlere Öffnung 12 auf. Der Rand 5 des Bechers 3 hat einen Außendurchmesser, der größer als der Durchmesser der Öffnung 12 ist. Der Rand 5 liegt also auf dem die Öffnung 12 umgebenden Bereich der Tragwand 10 auf und stellt sicher, dass der Becher 3 nicht durch die Öffnung 12 fällt.

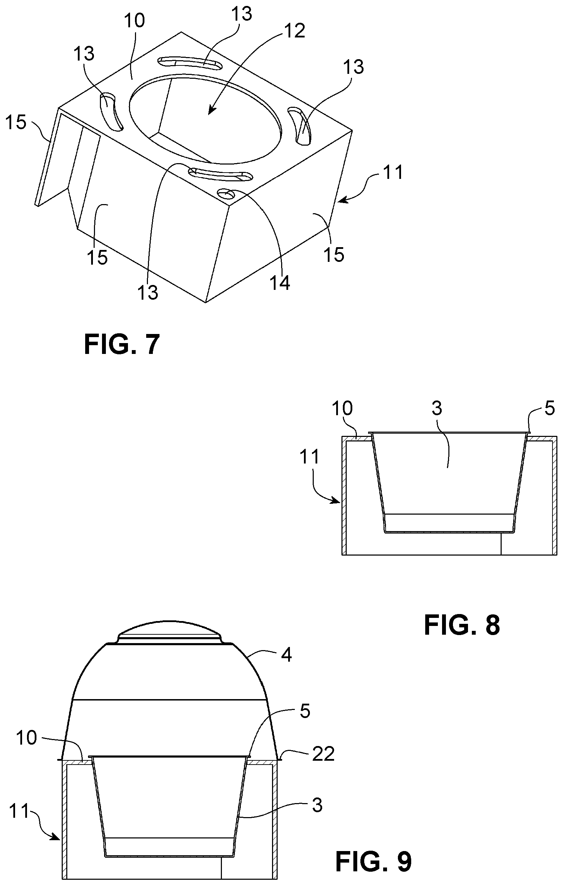

Die Tragwand 10 begrenzt die Kühlsektion innerhalb des Basisteils 1 nach oben. Die Tragwand 10 ist insbesondere in Fig. 7 zu erkennen, in der der Einsatz 11 vollständig dargestellt ist. Der Einsatz 11 besteht im Wesentlichen aus vier Seitenwänden 15, welche sich von den Rändern der Tragwand 10 nach unten erstrecken und die Tragwand 10 auf diese Weise abstützen. Um die große mittlere Öffnung 12 herum sind in der Tragwand 10 Luftdurchlässe 13 und eine Aufnahmeöffnung 14 vorgesehen. Die Luftdurchlässe 13 sind unmittelbar oberhalb des manschettenförmigen Kühlelements 7 angeordnet. Sie ermöglichen es, dass das manschettenförmige Kühlelement 7 nicht nur den Becher 3, sondern durch Konvektion auch die Kühlzone innerhalb der Abdeckkappe 4 kühlt. In der Praxis wird daher auch eine Kühlung gemäß dem hier beschriebenen Verfahren erzielt, bei der innerhalb des Bechers 3 eine niedrige Temperatur herrscht und innerhalb der Abdeckkappe eine höhere Temperatur, die aber unterhalb der Umgebungstemperatur außerhalb des Kühlbehälters liegt, selbst dann, wenn in dem Deckel 2 kein Kühlelement angeordnet ist. Die Kühlung durch das Kühlelement 7, welches den Becher 3 umgibt und auf eine niedrige Temperatur gekühlt ist, kann auch zur Kühlung der Kühlzone im Deckel 4 ausreichen. In die Aufnahmeöffnung 14 der Tragwand 10 kann ein Zubehörteil wie ein Eislöffel oder ein Strohhalm eingesteckt werden.

Alle Kühlelemente 6, 7, 9 sind vorzugsweise mit einer Flüssigkeit gefüllt, um möglichst lange Ihre Temperatur zu halten. Insbesondere eine Kühlflüssigkeit mit Phasenwechsel (Phase Change Material, PCM) eignet sich dafür, einen Kühlbehälter zu schaffen, der in den 2 Zonen die vorgegebenen Temperaturen für einen langen Zeitraum hält. Grundsätzlich kann die Kühlwirkung auch durch andere Kühlmittel bewirkt werden, beispielsweise Trockeneis. In diesem Fall ist aber ein direkter oder zu enger Kontakt mit dem Trockeneis zu vermeiden und der Aufnahmeraum ist durch Trennwände, ggf. thermisch isolierende Trennwände soweit von dem Trockeneis zu trennen, dass die zwei Zonen in dem Aufnahmeraum die erwünschten unterschiedlichen Temperaturen nicht unterschreiten.

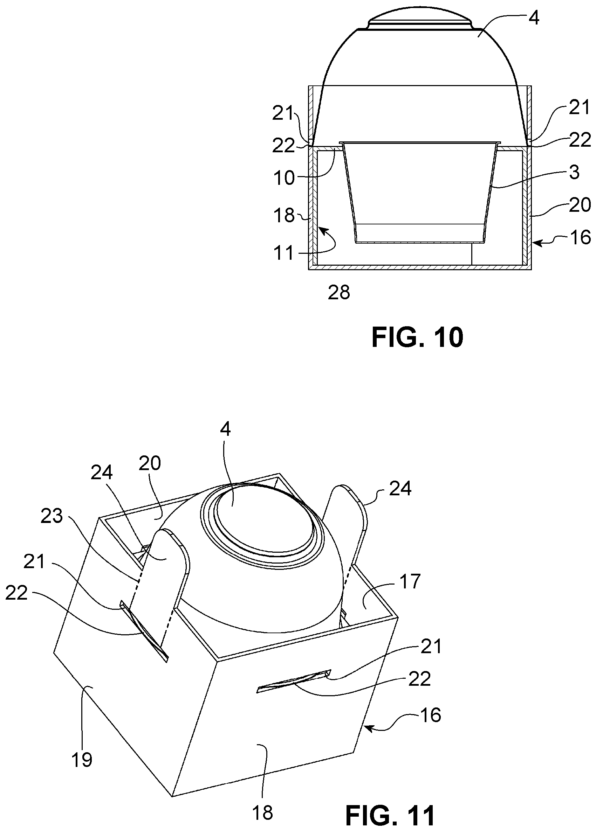

Die Abdeckkappe 4 ist mit einem zweiten Einsatz 16 verrastet. Der Einsatz 16 ist in der Fig. 6 dargestellt. Der zweite Einsatz 16 ist in den Grundkörper 1 eingesetzt, hat ebenfalls die Form einer rechteckigen Schale. Seine Seitenwände 18 - 21 liegen gegen die Außenwand des Grundkörpers 1 an. In dem zweiten Einsatz 16 befinden sich die Kühlelementen 6,7, und der erste Einsatz 11 mit dem darin gehaltenen Becher 3 ist darin eingesetzt (s. Fig. 10). Das Kühlelement 6 liegt auf der Bodenwand 28 des zweiten Einsatzes 16 auf.

Die Seitenwände 16-20 des zweiten Einsatzes 16 (siehe Fig. 6) weisen waagerechte Schlitze 21 auf, welche Rastöffnungen für den Rand 22 der Abdeckkappe 4 bilden. Die in den Bereichen der Rastöffnungen 21 liegenden Bereiche des Randes 22 der Abdeckkappe 4 bilden Rastvorsprünge, die in die Rastöffnungen 21 eingreifen und so die Abdeckkappe 4 festlegen.

Die Figuren 8 bis 11 zeigen, wie der dargestellte Kühlbehälter zusammengesetzt wird. Der erste Einsatz 11 nimmt den Becher 3 auf. Zu diesem Zweck durchragt der Becher 3 die mittlere Öffnung 12 in seiner Tragwand 10. Der Becherrand 5 liegt auf der Tragwand 10 in dem die Öffnung 12 umgebenden Bereich auf, sodass der Becher 3 von der Tragwand 10 gehalten ist (siehe Fig.8). Der Becher 3 wird von der Abdeckkappe 4 abgedeckt. Dies ist in Fig. 9 dargestellt. Es ist zu erkennen, dass der Durchmesser der Abdeckkappe 4 erhebliche größer ist, als er Durchmesser des Bechers 3. Auch die Abdeckkappe 4 weist einen radial vorstehenden Rand 22 auf. Der Rand 22 der Abdeckkappe 4 bildet einen Rastvorsprung. Wie in Fig. 10 und 11 zu erkennen ist, wird der Einsatz 11 in den Einsatz 16 eingesetzt. Die Tragwand 10 befindet sich auf Höhe der unteren Ränder der Schlitze 21 in den Seitenwänden 17-20 des Einsatzes 16. Beim Aufsetzen der Abdeckkappe 4 wird der Rand 22 der Abdeckkappe 4 elastisch zusammengedrückt und rastet federnd in die Schlitze 21 der Seitenwände 17-20 des Einsatzes 16 ein. Insbesondere in den Figuren 6 und 11 ist zu erkennen, dass die Materialbereiche der Seitenwände 17 und 19 oberhalb der Schlitze 21 durch Perforationslinien 23 abgetrennt sind. Oberhalb dieser Perforationslinien 23 erstrecken sich Reißlaschen 24. Die Reißlaschen 24 können entlang der Perforationslinien 23 abgerissen werden. Nun kann die Abdeckkappe 4 entnommen werden, weil die im Bereich der abgerissenen Reißlaschen 24 liegenden Schlitze 21 nicht mehr mit dem Rand 22 der Abdeckkappe 4, welcher den Rastvorsprung bildet, verrasten. Die Reißlaschen 24 bilden somit die verlagerbare Wandung, welche die Rastöffnung frei gibt.

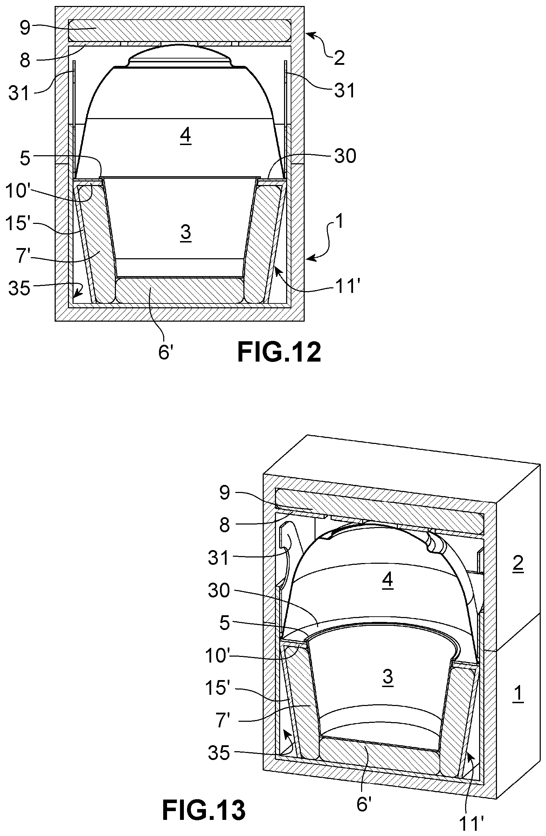

Eine alternative Ausgestaltung des Kühlbehälters ist in den Figuren 12 bis 16 dargestellt. Gleiche Teile sind hiermit den gleichen Bezugszeichen versehen. Insbesondere in den Figuren 12 und 13 ist zu erkennen, dass das manschettenförmige Kühlelement 7' sich annähernd in Form eines Kegelabschnitts nach unten verjüngt und somit der Kontur des Bechers 3 folgt. Das untere Kühlelement 6' erstreckt sich im Bereich des Bodens des Bechers 3 und hat einen kleineren Durchmesser als bei der ersten Ausführungsform.

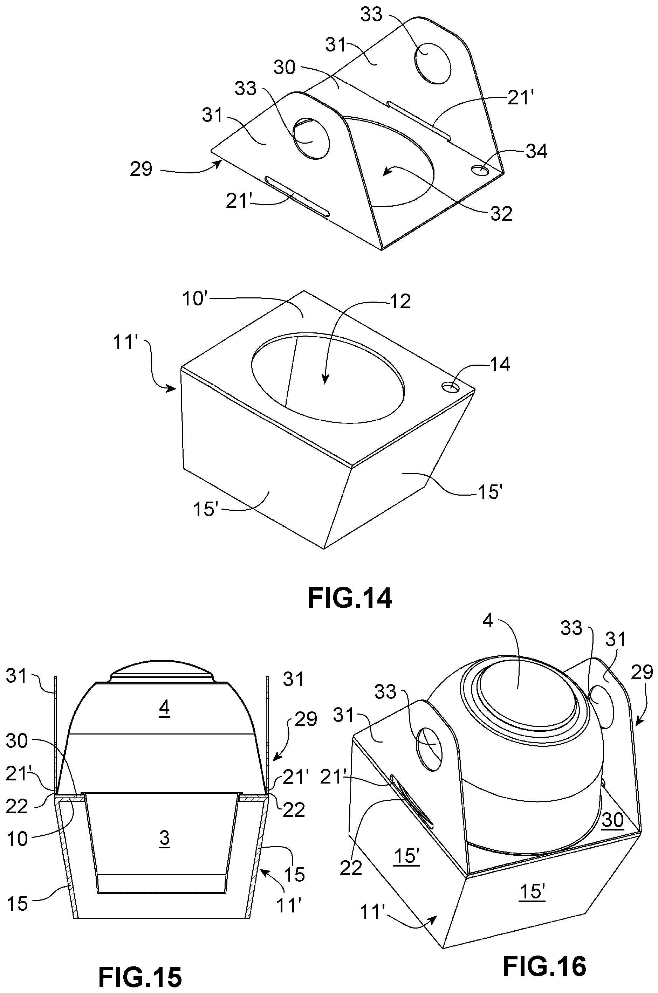

Die Einsätze 11', 29 dieser Ausführungsform des Kühlbehälters sind in Figur 14 dargestellt. Der erste Einsatz 11' entspricht im Wesentlichen dem ersten Einsatz 11 der ersten Ausführungsform. Er weist eine mittlere Öffnung 12 in der oberen Tragwand 10' zur Aufnahme des Bechers 3 auf. Dieser Einsatz 11' wird auch Bechereinsatz oder Locheinsatz genannt. Die Tragwand 10' ist auch mit einer Aufnahmeöffnung 14 versehen, weist aber, anders als bei der ersten Ausführungsform, keine Luftdurchlässe auf. Die Seitenwände 15' dieses Einsatzes 11' verlaufen leicht schräg nach unten, sodass sie im Wesentlichen der Kontur des leicht kegelförmigen Kühlelements 7' folgen.

Auf dem Einsatz 11' liegt ein Entnahmeeinsatz 29 auf, der als Entnahmehilfe für den befüllten Becher 3 aus dem Basisteil 1 des Kühlbehälters verwendet werden kann. Der Entnahmeeinsatz 29 weist eine horizontale Querwand 30 auf, an die zwei abgeknickte Zuglaschen 31 angrenzen. In der Querwand 30 befindet sich eine Becheröffnung 32, durch welche der Becher 3 hindurchgesteckt wird. Oberhalb der Knicklinien weisen die Zuglaschen 31 Schlitze 21' auf. Die Querwand 30 weist ferner eine Aufnahmeöffnung 34 auf. In jeder Zuglasche 31 ist eine Greiföffnung 33 vorgesehen.

In den Figuren 15 und 16 ist zu erkennen, dass der Entnahmeeinsatz 29 auf den ersten Einsatz 11' so aufgelegt wird, dass die Öffnungen 32, 34 in der Querwand des Entnahmeeinsatzes 29 mit den Öffnungen 12,14 in der Tragwand 10' des ersten Einsatzes 11' fluchten. Der Becher 3 wird durch die Öffnungen 32 und 12 gesteckt. Die Abdeckkappe 4 wird auf die Querwand 30 aufgelegt. Die Zuglaschen 31 werden hochgeknickt. Dabei bilden die Schlitze 21' in den Zuglaschen 31 die Rastöffnungen für den Rand 22 der Abdeckkappe 4.

Die hoch geknickten Zuglaschen 31 ragen aus dem Basisteil 1 des Kühlbehälters heraus. Sie können zur Entnahme des Bechers 3 nach oben gezogen werden. Der Becher 3 stützt sich mit seinem Rand 5 auf der Querwand 30 des Entnahmeeinsatzes 29 ab. Nach der Entnahme des Bechers 3 kann dieser auf einem Tisch abgestellt werden. Die Zuglaschen 31 bilden eine verlagerbare Wandung und können seitlich weg geklappt werden. Dabei wird die Verrastung des Randes 22 der Abdeckkappe 4 in den Schlitzen (Rastöffnungen) 21' der Zuglaschen 31 freigegeben. Anschließend kann der Entnahmeeinsatz 29 zum Boden des Bechers geschoben werden und der Becher 3 ergriffen werden.

Es ist für den Fachmann erkennbar, dass der Kühlbehälter weitere funktionale Einsätze aufweisen kann. Z.B. ist in den Figuren 12 und 13 zu erkennen, dass der erste Einsatz 11' und der untere Abschnitt der Zuglaschen 31 von einem weiteren Umhüllungseinsatz 35 umgeben ist, der die anderen Einsätze11', 29 und die Kühlelemente 6', 7' zu einer Einheit verbindet, die einfach in das Basisteil 1 des Kühlbehälters eingeschoben werden kann.

Sämtliche Einsätze der Kühlbehälter, bis auf den Entnahmeeinsatz 29, können miteinander veklebt sein, z.B. durch doppelseitiges Klebeband.

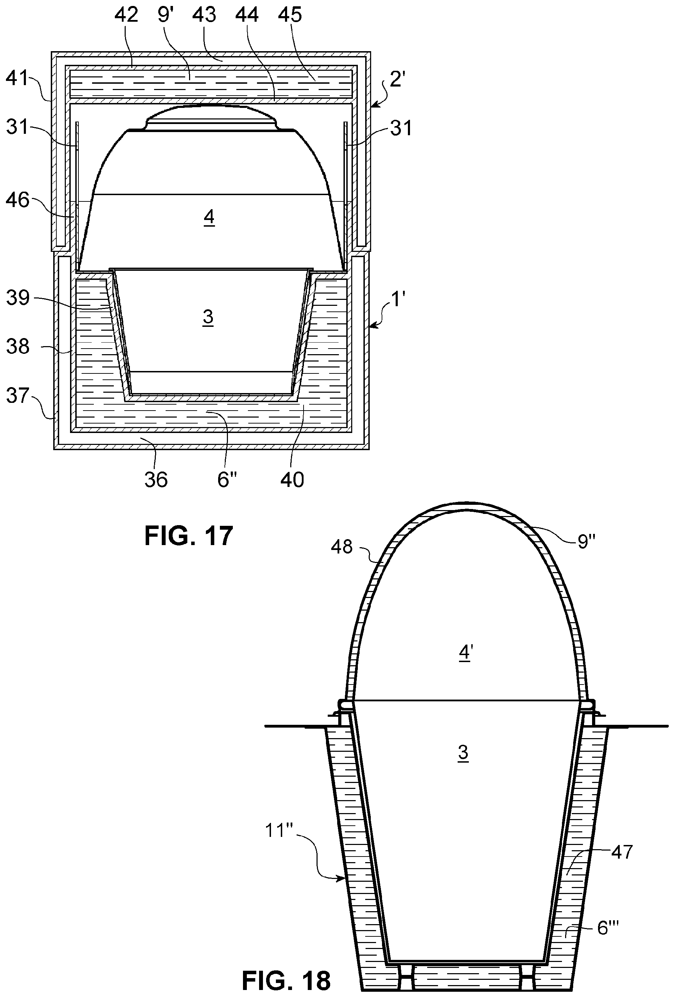

Die Fig. 17 zeigt eine Variante des Kühlbehälters, die zur mehrfachen Verwendung bestimmt ist. Diese Variante ist in geschnittener Darstellung entsprechend der Fig. 12 dargestellt. Gleiche Bauteile weisen hier gleiche Bezugszeichen auf. Insbesondere sind der Becher 3, die Abdeckkappe 4 und der Entnahmeeinsatz mit den Zuglaschen 31 wie in der vorangehenden Ausführungsform der Figuren 12-16 ausgebildet.

Bei der Variante der Fig. 17 können der Grundkörper 1' und der Deckel 2' bei dieser wiederverwendbaren Ausführungsform aus widerstandsfähigem Material bestehen, insbesondere aus einem Kunststoff oder Metall. Das widerstandsfähige Material ermöglicht ein wiederholtes Reinigen von Grundkörper 1' und Deckel 2'. Ferner weist das widerstandsfähige Material eine erhebliche Festigkeit auf und lässt zu, dass der Grundkörper 1' und der Deckel 2' mit dünnen Wandlungen hergestellt werden, wobei zwischen den dünnen Wandungen mindestens ein Hohlraum gebildet sein kann. In der in Fig. 17 gezeigten Ausführungsform weist der Grundkörper 1' einen ersten, entlang seiner äußeren Wandung 37 verlaufenden Hohlraum 36 auf. Dieser Hohlraum 36 ist nach innen durch die Wandung 38 begrenzt und mit Luft gefüllt. Dieser Hohlraum 36 kann gegenüber der Umgebung abgedichtet sein und Luft mit einem Unterdruck aufweisen. Luft ist ein Medium mit geringer thermischer Leitfähigkeit, insbesondere wenn sie mit einem geringen Druck eingefüllt ist. Der Hohlraum 36 reduziert folglich die Erwärmung des innerhalb des Grundkörpers 1' befindlichen Aufnahmeraums und schützt die Außenwand des Basisteils 1' gegen übermäßige Abkühlung.

Ein weiterer Hohlraum 40 kann zwischen der Wandung 38 und der inneren Wandung 39 des Grundkörpers 1' ausgebildet sein. In diesen Hohlraum 40 kann PCM-Kühlflüssigkeit eingefüllt sein. Durch die PCM-Kühlflüssigkeit wird innerhalb des Grundkörpers 1' ein Kühlelement 6" gebildet. In die innere Wandung 39 des Grundkörpers 1' kann dann der Becher 3 eingestellt werden.

Auf ähnliche Weise kann der Deckel 2' des Kühlbehälters der Fig. 17 ausgebildet sein. Eine äußere Wandung 41 und eine innere Wandung 42 definieren ein Hohlraum 43, der mit Luft gefüllt ist. Im oberen Bereich des Deckels 2' ist eine dritte Wandung 44 vorgesehen, welche gemeinsam mit der Wandung 42 einen Hohlraum 45 zur Aufnahme einer Kühlflüssigkeit begrenzt, die das zweite Kühlelement 9' im Deckel 2 bilden kann.

Der Grundkörper 1' kann eine obere Verbindungswand 46 aufweisen, die in den unteren Bereich des Deckels 2' einsteckbar ist und den Innenraum ders Kühlbehälters nach außen abdichtet. Zusätzlich können Dichtungen (nicht dargestellt) vorgesehen sein, welche die Dichtigkeit erhöhen. Auch können bei Bedarf Verbindungselemente (nicht dargestellt) vorgesehen sein, welche den Deckel 2' und den Grundkörper 1' lösbar miteinander verbinden, so dass der Kühlbehälter wiederverschließbar ist. Derartige Verbindungselemente können z.B. Gewinde- oder Schnallenverbindungen sein. Auch ein elastisches Band kann verwendet werden, um den Deckel 2' und den Grundkörper 1' elastisch gegeneinander zu spannen. Auf der Außenwand des Kühlbehälters kann auch eine flexible Außenschicht (nicht dargestellt) aus isolierendem Material wie Gummi oder Kunststoff angebracht werden, um zu vermeiden, dass der Kühlbehälter beim Berühren zu kalt ist.

Die Fig. 18 zeigt eine alternative Ausführungsform eines Einsatzes 11", der doppelwandig ausgebildet ist, so dass er einen geschlossenen Hohlraum 47 aufweist. Der Einsatz 11" kann z.B. aus Kunststoff bestehen. In dem Hohlraum 47 des Einsatzes ist eine Kühlflüssigkeit (zum Beispiel eine PCM-Flüssigkeit) eingefüllt. Der Einsatz 11" bildet somit das erste Kühlelement 6"'. Die Kühlwirkung dieses Einsatzes 11" ist sehr gut, weil der Becher 3 ohne erhebliches Spiel in diesem Einsatz 11" eingefügt sein kann und die Temperatur des Kühlelements 6‴ ohne Verluste auf den Becher 3 übertragen wird. Optimalerweise befindet sich der Becher 3 in unmittelbarem Kontakt mit der inneren Wandung des Kühlelements 6‴, so dass die Temperatur über Wärmeleitung von dem Kühlelements 6‴ auf den Becher 3 übertragen wird.

Auf ähnliche Weise kann bei der Ausführungsform der Fig. 18 die Abdeckkappe 4' doppelwandig mit einem Hohlraum 48 geformt sein, in dem Kühlflüssigkeit zur Bildung des zweiten Kühlelements 9" eingefüllt ist. Wenn die Kühlwirkung des ersten Kühlelements 6‴ ausreichend hoch ist, kann aber auch auf ein zweites Kühlelement 9" in der Abdeckkappe 4' verzichtet werden. Der Einsatz 11" und die Abdeckkappe 4' werden in dem in Fig. 18 dargestellten geschlossenen Zustand in den Grundkörper 1 und den Deckel aus Fig. 13 eingefügt. Bei dieser Verpackung ist anzustreben, dass zumindest Einsatz 11" und Abdeckkappe 4" wieder zum Lieferanten zurückgeführt werden, um eine Mehrfachbenutzung der Kühlelemente 6‴ und 9" sicherzustellen. Bei der Verwendung in einer Eisdiele können diese Kühlelemente 6‴ und 9" vielfach (bis zu 100 mal) eingefroren werden, um als Kühlelemente einer Transportverpackung für Speiseeis zu dienen. Eine obere Wandung des Einsatzes 11" kann den Innenraum des Basisteils der Verpackung abdecken. Der Becher 3 kann etwas höher als der Innenraum des Basisteils sein, so dass sein Rand nach oben über die obere Wandung des Einsatzes 11" hervorsteht und durch den Benutzer leicht ergriffen werden kann. Die Abdeckkappe 4' hat hier eine relativ kleine Größe. Wenn die Abdeckkappe großvolumige Dekorationselemente abdecken soll, kann sie auch einen größeren Durchmesser aufweisen, wie z.B. die Abdeckkappe 4 in Fig. 17, oder eine andere größere Form aufweisen, als die in Fig. 18 dargestellte Abdeckkappe 4'.

Die Abdeckkappe in den dargestellten Ausführungsformen erstreckte sich lediglich über den Bereich der zweiten, oberen Kühlzone. Die Abdeckkappe ist aber nicht darauf beschränkt. Sie kann auch größer sein und die erste Kühlzone teilweise oder vollständig umgeben.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1, 1': Basisteil
- 2, 2': Deckel
- 3: Becher
- 4, 4': Abdeckkappe
- 5: Becherrand
- 6, 6', 6", 6‴: Kühlelement
- 7, 7': Kühlelement
- 8: Trennwand
- 9, 9', 9": Kühlelement
- 10, 10': Tragwand
- 11,11",11": erster Einsatz
- 12: mittlere Öffnung
- 13: Luftdurchlass
- 14: Aufnahmeöffnung
- 15, 15': Seitenwand
- 16: zweiter Einsatz
- 17: Seitenwand
- 18: Seitenwand
- 19: Seitenwand
- 20: Seitenwand
- 21, 21': Schlitz, Rastöffnung
- 22: Rand, Rastvorsprung
- 23: Perforationslinie
- 24: Reißlasche
- 25: Öffnung
- 26: Öffnung
- 27: Öffnung
- 28: Bodenwand
- 29: Entnahmeeinsatz
- 30: Querwand
- 31: Zuglasche
- 32: Becheröffnung
- 33: Greiföffnung
- 34: Aufnahmeöffnung
- 35: Umhüllungseinsatz
- 36: Hohlraum
- 37: äußere Wandung
- 38: Wandung
- 39: innere Wandung
- 40: Hohlraum
- 41: äußere Wandung
- 42: Wandung
- 43: Hohlraum
- 44: innere Wandung
- 45: Hohlraum
- 46: Verbindungswand
- 47: Hohlraum
- 48: Hohlraum

## Patentansprüche

1. Verfahren zum Kühlen eines Speiseeisproduktes, bei dem mindestens ein Kühlelement (6, 7, 6', 7', 6", 6"', 9, 9', 9") in eine Kühlsektion eines Kühlbehälters eingebracht wird und bei dem das Produkt in einen Aufnahmeraum des Kühlbehälters eingebracht wird,
**dadurch gekennzeichnet, dass**
der Aufnahmeraum in zwei Zonen unterteilt wird und die erste, untere Zone des Aufnahmeraums durch mindestens ein Kühlelement (6, 7, 6', 7', 6", 6‴) auf eine erste Temperatur unterhalb von -10 °C gekühlt wird und die zweite, obere Zone des Aufnahmeraums durch mindestens ein Kühlelement (9, 9', 9") auf eine zweite Temperatur zwischen 0 °C und 7 °C gekühlt wird.

2. Verfahren nach Anspruch 1, **dadurch gekennzeichnet, dass** mindestens ein erstes Kühlelement (6, 6', 6", 6‴) mit einer ersten Temperatur in eine erste Kühlsektion des Kühlbehälters eingebracht wird, die an die erste Zone angrenzt, und dass mindestens ein zweites Kühlelement (9, 9', 9") mit einer zweiten Temperatur in eine zweite Kühlsektion des Kühlbehälters eingebracht wird, die an die zweite Zone angrenzt.

3. Verfahren nach Anspruch 1 oder 2, **dadurch gekennzeichnet, dass** die erste Kühlsektion und die erste Zone in einem Grundkörper (1, 1') des Kühlbehälters angeordnet ist, dass die zweite Kühlsektion und die zweite Zone in einem Deckel (2, 2') des Kühlbehälters angeordnet ist und dass das Produkt in den Grundkörper (1, 1') eingestellt wird und der Deckel (2, 2') so auf den Grundkörper (1, 1') aufgesetzt wird, dass der Aufnahmeraum verschlossen wird.

4. Verfahren nach Anspruch 3, **dadurch gekennzeichnet, dass** in dem Grundkörper (1, 1') mindestens ein Einsatz (11, 16, 11', 29, 35, 11") und in dem Deckel eine kuppelförmige Abdeckkappe (4, 4') eingebracht wird und dass die Abdeckkappe (4) mit dem Grundkörper (1, 1') oder dem Einsatz (11", 16, 29) verrastet wird.

5. Verfahren nach Anspruch 4, **dadurch gekennzeichnet, dass** zwei zueinander komplementäre Rastelemente (21, 21 ', 22) miteinander in Eingriff gebracht werden, die einerseits an der Abdeckkappe (4) und andererseits an dem Einsatz (16, 29) bzw. dem Grundkörper (1) angeordnet sind und dass mindestens ein Rastelement (21) an einer verlagerbaren Wandung (24, 31) angeordnet ist, wobei durch Lageänderung der Wandung (24, 31) die Verrastung gelöst wird.

6. Verfahren nach einem der Ansprüche 3 bis 5, **dadurch gekennzeichnet, dass** in dem Kühlbehälter mindestens ein Zugelement (31) angeordnet wird und durch Ziehen an dem Zugelement (31) das Produkt aus dem Grundkörper (1) bewegt wird.

7. Verfahren nach einem der vorangehenden Ansprüche, **gekennzeichnet durch** mindestens einen der folgenden Schritte:
- die erste Zone wird auf eine Temperatur von unter - 10 °C gekühlt;
- die erste Zone wird auf eine Temperatur von etwa - 14 °C gekühlt;
- die zweite Zone wird auf eine Temperatur über dem Gefrierpunkt gekühlt;
- die zweite Zone wird auf eine Temperatur von etwa 0 °C bis 7 °C gekühlt.

8. Verfahren nach einem der vorangehenden Ansprüche, **dadurch gekennzeichnet, dass** der Aufnahmeraum mindestens einen Bereich mit mehreren parallelen Wandungen (37, 38, 39, 41, 42, 44) aufweist, wobei in den Hohlraum zwischen die Wandungen eine Kühlflüssigkeit zum Einbringen des Kühlelements (6", 7") eingefüllt wird oder ein thermisch wenig leitfähiges Medium zur thermischen Isolation des Aufnahmeraums eingefüllt wird.

9. Kühlbehälter mit mindestens einem Aufnahmeraum für ein Speiseeisprodukt und einem an den Aufnahmeraum angrenzenden Kühlsektor zur Aufnahme eines Kühlelements (6, 7, 6', 7'), **dadurch gekennzeichnet, dass** an den Aufnahmeraum mindestens zwei Kühlsektoren angrenzen, wobei die Kühlsektoren Kühlelemente (6,7, 6', 7', 9, 9', 9") umfassen, die den Aufnahmeraum in mindestens zwei Zonen unterteilen, und die erste, untere Zone des Aufnahmeraums auf eine erste Temperatur unterhalb von -10 °C gekühlt wird und die zweite, obere Zone des Aufnahmeraums auf eine zweite Temperatur zwischen 0 °C und 7 °C gekühlt wird.

10. Kühlbehälter nach Anspruch 9, **dadurch gekennzeichnet, dass** er einen Grundkörper (1) aus einem dünnwandigen Material aufweist, der eine erste Zone zur Aufnahme eines Bechers (3) aufweist, die von einem ersten Kühlsektor umgeben ist, und dass er einen Deckel (2) aus einem dünnwandigen Material aufweist, der eine zweite Zone aufweist, die von einem zweiten Kühlsektor umgeben ist.

11. Kühlbehälter nach Anspruch 10, **dadurch gekennzeichnet, dass** er mindestens eins der folgenden Merkmale aufweist:
- der Grundkörper (1) weist mindestens einen Einsatz (11, 11', 11") auf, der den Becher (3) in der ersten Zone hält;
- der Einsatz (11 ") im Grundkörper (1) weist einen den Becher (3) umgebenden Hohlraum (47) auf, der ein erstes Kühlelement (6‴) bildet;
- der Deckel (2) weist eine kuppelförmige Abdeckkappe (4) auf;
- die Abdeckkappe (4') weist einen Hohlraum (48) auf, der ein zweites Kühlelement (9") bildet;
- die Abdeckkappe (4) ist mit dem Einsatz (16, 30) oder dem Grundkörper (1) verrastbar;
- zwei zueinander komplementäre Rastelemente (21, 21', 22) sind einerseits an der Abdeckkappe (4) und andererseits an dem Einsatz (16, 30) bzw. dem Grundkörper (1) angeordnet;
- mindestens ein Rastelement (21) ist an einer verlagerbaren Wandung (24, 31) angeordnet, wobei durch Lageänderung der Wandung (24,31) die Verrastung lösbar ist;
- die verlagerbare Wandung (24) ist perforiert und ausreißbar;
- die verlagerbare Wandung (31) ist entlang einer Knicklinie umknickbar.

12. Kühlbehälter nach Anspruch 11, **dadurch gekennzeichnet, dass** der Einsatz (11, 11', 16, 29) mindestens eines der folgenden Merkmale aufweist:
- eine Zuglasche (31), mit der der Einsatz (29) mit dem darin gehaltenen Becher (3) aus dem Grundkörper (1) ziehbar ist;
- eine Rastöffnung (21) als erstes Rastelement, mit der ein Rastvorsprung (22) an der Abdeckkappe ( 4) als zweites Rastelement zusammenwirkt;
- die Rastöffnung (21) ist an einer Zuglasche (31) angeordnet, wobei die Zuglasche (31) bei aus dem Grundkörper (1) entnommenen Einsatz (29) umklappbar ist und dabei den Rastvorsprung (22) freigibt.

13. Kühlbehälter nach Anspruch 11 oder 12, **dadurch gekennzeichnet, dass** der Einsatz (11, 11') aus einem flächigen Zuschnitt besteht, der eine Tragwand (10) mit einer Öffnung (12) zur Aufnahme des Bechers (3) aufweist, und der mehrere Seitenwände (15, 15') aufweist, die über Knicklinien mit der Tragwand (10) verbunden sind und die Tragwand (10) in einem Abstand zu einer Bodenwand des Grundkörpers (1) halten.

14. Kühlbehälter nach einem der Ansprüche 10 bis 13, **dadurch gekennzeichnet, dass** der Grundkörper (1") und/oder der Deckel (2") einen Bereich mit mehreren Wandungen (37, 38, 39, 41, 42, 44) aufweist, zwischen denen ein Hohlraum (36, 40, 43, 45) gebildet ist.

15. Kühlbehälter nach Anspruch 14, **gekennzeichnet durch** mindestens eines der folgenden Merkmale:
- in den Hohlraum (40, 45) ist eine Kühlflüssigkeit eingefüllt;
- in den Hohlraum (36, 43) ist ein thermisch wenig leitfähiges Medium eingefüllt, insbesondere Luft und insbesondere bei einem sehr niedrigen absoluten Druck.

## Claims

1. Method for cooling an ice cream product, in which at least one cooling element (6, 7, 6', 7', 6", 6‴, 9, 9', 9") is introduced into a cooling section of a cooling container and in which the product is introduced into a receiving space of the cooling container,
**characterized in that**
the receiving space is divided into two zones and the first, lower zone of the receiving space is cooled by -at least one cooling element (6, 7, 6', 7', 6", 6‴) to a first temperature below -10 °C and the second, upper zone of the receiving space is cooled by at least one cooling element (9, 9', 9") to a second temperature of between 0 °C to 7 °C.

2. Method according to claim 1, **characterized in that** at least one first cooling element (6, 6', 6", 6"') having a first temperature is introduced into a first cooling section of the cooling container adjacent to the first zone, and **in that** at least one second cooling element (9, 9', 9") having a second temperature is introduced into a second cooling section of the cooling container adjacent to the second zone.

3. Method according to claim 1 or 2, **characterized in that** the first cooling section and the first zone are arranged in a base body (1, 1') of the cooling container, that the second cooling section and the second zone are arranged in a lid (2, 2') of the cooling container and that the product is placed in the base body (1, 1') and the lid (2, 2') is placed on the base body (1, 1') in such a way that the receiving space is closed.

4. Method according to claim 3, **characterized in that** at least one insert (11, 16, 11', 29, 35, 11") is introduced into the base body (1, 1') and a dome-shaped cover cap (4, 4') is introduced into the lid, and **in that** the cover cap (4) is latched to the base body (1, 1') or to the insert (11", 16, 29).

5. Method according to claim 4, **characterized in that** two mutually complementary latching elements (21, 21', 22) are brought into engagement with one another, which are arranged on the one hand on the cover cap (4) and on the other hand on the insert (16, 29) or the base body (1), and **in that** at least one latching element (21) is arranged on a displaceable wall (24, 31), the latching being released by changing the position of the wall (24, 31).

6. Method according to one of claims 3 to 5, **characterized in that** at least one pull element (31) is arranged in the cooling container and the product is moved out of the base body (1) by pulling on the pull element (31).

7. Method according to any one of the preceding claims, **characterized by** at least one of the following steps:
- the first zone is cooled to a temperature below - 10 °C;
- the first zone is cooled to a temperature of about - 14 °C;
- the second zone is cooled to a temperature above freezing;
- the second zone is cooled to a temperature of about 0 °C to 7 °C.

8. Method according to one of the preceding claims, **characterized in that** the receiving space has at least one region with a plurality of parallel walls (37, 38, 39, 41, 42, 44), wherein a cooling liquid is filled into the cavity between the walls for introducing the cooling element (6", 7") or a thermally low conductive medium is filled in for thermal insulation of the receiving space.

9. Cooling container with at least one receiving space for an ice cream product and a cooling sector adjacent to the receiving space for receiving a cooling element (6, 7, 6', 7'), **characterized in that** at least two cooling sectors are adjacent to the receiving space, said cooling sectors comprising cooling elements (6, 7, 6', 7', 9, 9', 9") which divide the receiving space into at least two zones, and the first, lower zone of the receiving space is cooled to a first temperature below -10 °C and the second, upper zone of the receiving space is cooled to a second temperature between 0 °C and 7 °C.

10. Cooling container according to claim 9, **characterized in that** it comprises a base body (1) made of a thin-walled material having a first zone for receiving a cup (3) surrounded by a first cooling sector, and **in that** it comprises a lid (2) made of a thin-walled material having a second zone surrounded by a second cooling sector.

11. Cooling container according to claim 10, **characterized in that** it has at least one of the following features:
- the base body (1) has at least one insert (11, 11', 11") which holds the cup (3) in the first zone;
- the insert (11") in the base body (1) has a cavity (47) surrounding the cup (3) and forming a first cooling element (6"');
- the lid (2) has a dome-shaped cover cap (4);
- the cover cap (4') has a cavity (48) forming a second cooling element (9");
- the cover cap (4) can be latched to the insert (16, 30) or the base body (1);
- two mutually complementary latching elements (21, 21', 22) are arranged on the cover cap (4) on the one hand and on the insert (16, 30) or the base body (1) on the other;
- at least one latching element (21) is arranged on a displaceable wall (24, 31), wherein the latching can be released by changing the position of the wall (24, 31);
- the displaceable wall (24) is perforated and can be torn out;
- the displaceable wall (31) is foldable along a crease line.

12. Cooling container according to claim 11, **characterized in that** the insert (11, 11', 16, 29) has at least one of the following features:
- a pull tab (31) with which the insert (29) with the cup (3) held therein can be pulled out of the base body (1);
- a latching opening (21) as a first latching element, with which a latching projection (22) on the cover cap (4) interacts as a second latching element;
- the latching opening (21) is arranged on a pull tab (31), wherein the pull tab (31) can be folded over when the insert (29) is removed from the base body (1), thereby releasing the latching projection (22).

13. Cooling container according to claim 11 or 12, **characterized in that** the insert (11, 11') consists of a flat blank which has a support wall (10) with an opening (12) for receiving the cup (3), and which has a plurality of side walls (15, 15') which are connected to the support wall (10) via crease lines and hold the support wall (10) at a distance from a bottom wall of the base body (1).

14. Cooling container according to one of claims 10 to 13, **characterized in that** the base body (1") and/or the lid (2") has a region with a plurality of walls (37, 38, 39, 41, 42, 44) between which a cavity (36, 40, 43, 45) is formed.

15. Cooling container according to claim 14, **characterized by** at least one of the following features:
• a cooling liquid is filled into the cavity (40, 45);
• a thermally low conductive medium is filled into the cavity (36, 43), in particular air and in particular at a very low absolute pressure.

## Revendications

1. Procédé de refroidissement d'un produit de crème glacée, dans lequel au moins un élément de refroidissement (6, 7, 6', 7', 6", 6"', 9, 9', 9") est introduit dans une section de refroidissement d'un récipient de refroidissement et dans lequel le produit est introduit dans un espace de réception du récipient de refroidissement,
**caractérisé en ce que**
l'espace de réception est divisé en deux zones et la première zone inférieure de l'espace de réception est refroidie par au moins un élément de refroidissement (6, 7, 6', 7', 6", 6"') jusqu'à une première température inférieure à -10 °C et la seconde zone supérieure de l'espace de réception est refroidie par au moins un élément de refroidissement (9, 9', 9") jusqu'à une seconde température comprise entre 0 °C et 7 °C.

2. Procédé selon la revendication 1, **caractérisé en ce qu'**au moins un premier élément de refroidissement (6, 6', 6", 6"') ayant une première température est introduit dans une première section de refroidissement du récipient de refroidissement adjacente à la première zone, et **en ce qu'**au moins un second élément de refroidissement (9, 9', 9") ayant une seconde température est introduit dans une seconde section de refroidissement du récipient de refroidissement adjacente à la seconde zone.

3. Procédé selon la revendication 1 ou 2, **caractérisé en ce que** la première section de refroidissement et la première zone sont disposées dans un corps de base (1, 1') du récipient de refroidissement, **en ce que** la seconde section de refroidissement et la seconde zone sont disposées dans un couvercle (2, 2') du récipient de refroidissement et **en ce que** le produit est placé dans le corps de base (1, 1') et le couvercle (2, 2') est placé sur le corps de base (1, 1') de telle sorte que l'espace de réception soit fermé.

4. Procédé selon la revendication 3, **caractérisé en ce qu'**au moins un insert (11, 16, 11', 29, 35, 11") est introduit dans le corps de base (1, 1') et un capuchon de recouvrement en forme de dôme (4, 4') est introduit dans le couvercle, et **en ce que** le capuchon de recouvrement (4) est encliqueté sur le corps de base (1, 1') ou sur l'insert (11", 16, 29).

5. Procédé selon la revendication 4, **caractérisé en ce que** deux éléments d'encliquetage mutuellement complémentaires (21, 21', 22) sont amenés en engagement l'un avec l'autre, lesquels sont disposés d'une part sur le capuchon de recouvrement (4) et d'autre part sur l'insert (16, 29) ou sur le corps de base (1), et **en ce qu'**au moins un élément d'encliquetage (21) est disposé sur une paroi déplaçable (24, 31), l'encliquetage étant libéré par modification de la position de la paroi (24, 31).

6. Procédé selon l'une des revendications 3 à 5, **caractérisé en ce qu'**au moins un élément de traction (31) est disposé dans le récipient de refroidissement et le produit est déplacé hors du corps de base (1) par traction sur l'élément de traction (31).

7. Procédé selon l'une quelconque des revendications précédentes, **caractérisé par** au moins l'une des étapes suivantes :
- la première zone est refroidie jusqu'à une température inférieure à -10 °C ;
- la première zone est refroidie jusqu'à une température d'environ -14 °C ;
- la seconde zone est refroidie jusqu'à une température au-dessus du point de congélation ;
- la seconde zone est refroidie jusqu'à une température d'environ 0 °C à 7 °C.

8. Procédé selon l'une des revendications précédentes, **caractérisé en ce que** l'espace de réception présente au moins une région avec une pluralité de parois parallèles (37, 38, 39, 41, 42, 44), dans laquelle un liquide de refroidissement est rempli dans la cavité entre les parois pour l'introduction de l'élément de refroidissement (6", 7") ou un milieu faiblement conducteur thermiquement est introduit pour l'isolation thermique de l'espace de réception.

9. Récipient de refroidissement avec au moins un espace de réception pour un produit de crème glacée et un secteur de refroidissement adjacent à l'espace de réception pour recevoir un élément de refroidissement (6, 7, 6', 7'), **caractérisé en ce qu'**au moins deux secteurs de refroidissement sont adjacents à l'espace de réception, lesdits secteurs de refroidissement comprenant des éléments de refroidissement (6, 7, 6', 7', 9, 9', 9") qui divisent l'espace de réception en au moins deux zones, et la première zone inférieure de l'espace de réception est refroidie jusqu'à une première température inférieure à -10 °C et la seconde zone supérieure de l'espace de réception est refroidie jusqu'à une seconde température comprise entre 0 °C et 7 °C.

10. Récipient de refroidissement selon la revendication 9, **caractérisé en ce qu'**il comprend un corps de base (1) réalisé en un matériau à paroi mince ayant une première zone pour recevoir un gobelet (3) entourée par un premier secteur de refroidissement, et **en ce qu'**il comprend un couvercle (2) réalisé en un matériau à paroi mince ayant une seconde zone entourée par un second secteur de refroidissement.

11. Récipient de refroidissement selon la revendication 10, **caractérisé en ce qu'**il présente au moins l'une des caractéristiques suivantes :
- le corps de base (1) présente au moins un insert (11, 11', 11") qui maintient le gobelet (3) dans la première zone ;
- l'insert (11") dans le corps de base (1) présente une cavité (47) entourant le gobelet (3) et formant un premier élément de refroidissement (6"') ;
- le couvercle (2) présente un capuchon de recouvrement en forme de dôme (4)
- le capuchon de recouvrement (4') présente une cavité (48) formant un second élément de refroidissement (9") ;
- le capuchon de recouvrement (4) peut être encliqueté sur l'insert (16, 30) ou sur le corps de base (1) ;
- deux éléments d'encliquetage mutuellement complémentaires (21, 21', 22) sont disposés sur le capuchon de recouvrement (4) d'une part et sur l'insert (16, 30) ou sur le corps de base (1) d'autre part ;
- au moins un élément d'encliquetage (21) est disposé sur une paroi déplaçable (24, 31), l'encliquetage pouvant être libéré par modification de la position de la paroi (24, 31) ;
- la paroi déplaçable (24) est perforée et peut être arrachée ;
- la paroi déplaçable (31) est pliable le long d'une ligne de pliage.

12. Récipient de refroidissement selon la revendication 11, **caractérisé en ce que** l'insert (11, 11', 16, 29) présente au moins l'une des caractéristiques suivantes :
- une languette de traction (31) avec laquelle l'insert (29) avec le gobelet (3) maintenu en celui-ci peut être tiré hors du corps de base (1) ;
- une ouverture d'encliquetage (21) en tant que premier élément d'encliquetage, avec laquelle une saillie d'encliquetage (22) sur le capuchon de recouvrement (4) interagit en tant que second élément d'encliquetage ;
- l'ouverture d'encliquetage (21) est disposée sur une languette de traction (31), la languette de traction (31) pouvant être rabattue lorsque l'insert (29) est retiré du corps de base (1), libérant ainsi la saillie d'encliquetage (22).

13. Récipient de refroidissement selon la revendication 11 ou 12, **caractérisé en ce que** l'insert (11, 11') consiste en un flan plat qui présente une paroi de support (10) avec une ouverture (12) pour recevoir le gobelet (3), et qui présente une pluralité de parois latérales (15, 15') qui sont reliées à la paroi de support (10) via des lignes de pliage et maintiennent la paroi de support (10) à distance d'une paroi de fond du corps de base (1).

14. Récipient de refroidissement selon l'une des revendications 10 à 13, **caractérisé en ce que** le corps de base (1") et/ou le couvercle (2") présente une région avec une pluralité de parois (37, 38, 39, 41, 42, 44) entre lesquelles une cavité (36, 40, 43, 45) est formée.

15. Récipient de refroidissement selon la revendication 14, **caractérisé par** au moins l'une des caractéristiques suivantes :
- un liquide de refroidissement est rempli dans la cavité (40, 45) ;
- un milieu faiblement conducteur thermiquement est rempli dans la cavité (36, 43), en particulier de l'air et en particulier à une très faible pression absolue.
